# EUROPEAN PATENT SPECIFICATION

(11) **EP 1 919 163 B1**
(45) Date of publication and mention of the grant of the patent: **23.02.2011**
(21) Application number: 07380302.5
(22) Date of filing: 06.11.2007
(51) Int. Cl.: H04L 29/06, H04L 29/08

(54) **Method and network for the migration of mobile agents**
Verfahren und Netzwerk für die Migration mobiler Agenten
Méthode et réseau pour la migration des agents mobiles

(30) Priority: 06.11.2006 ES 200602811
(43) Date of publication of application: 07.05.2008
(73) Proprietor: Vodafone Group PLC, Newbury Berkshire RG14 2FN (GB); Vodafone España, S.A., 28108 Alcobendas (Madrid) (ES)
(72) Inventor: Bernà Forniés, Hector, 50018 Zaragoza (ES); Caudevilla Laliena, Guillermo, 22003 Huesca (ES); Frisa Rubio, Raquel, 50003 Zaragoza (ES); Sanclemente Abòs, Luis Javier, 22003 Huesca (ES)
(74) Representative: Keston, David Arthur

(56) References cited:
- WO-A-01/47213
- CA-A1- 2 313 852
- US-A1- 2006 149 811
- HSIAO-HONG TSAI ET AL: "Mobile Agent Communication Using SIP" APPLICATIONS AND THE INTERNET, 2005. PROCEEDINGS. THE 2005 SYMPOSIUM ON TRENTO, ITALY 31-04 JAN. 2005, PISCATAWAY, NJ, USA,IEEE, 31 January 2005 (2005-01-31), pages 274-279, XP010765769 ISBN: 0-7695-2262-9

## Description

### FIELD OF THE INVENTION

This invention is applied to the communications network field. More specifically, the described invention relates to the use and application of the Session Initiation Protocol (SIP), both for the location of at least one mobile agent in a terminal device of a network, and for exchanging messages between mobile agents of different terminal devices of the network, as well as for launching said mobile agents between terminal devices of said network, providing wireless or fixed communications with the support of the Internet Protocol (IP).

### BACKGROUND OF THE INVENTION

A mobile agent is a type of software agent; particularly it is a software entity carrying out certain activities on behalf of another entity or person (the user) for the purpose of completing a task and having a certain degree of autonomy in its actions, sociability with other agents, reactivity against situations of the environment and proactivity with the elements interacting with it in carrying out its function, with the addition of the capacity to travel through a computer or telecommunications network, interacting with external servers and being able to collect information on behalf of its user in order to return after completing the previously set tasks. In other words, a mobile agent has the following properties:
- It is intelligent, because it can learn from experience, memorize data and situations and deduce conclusions.
- It is autonomous, because its life cycle is monitored and it makes its own decisions.
- It is reactive, being able to interact with its environment, perceiving the changes and generating responses to them. The environment of the mobile agent is determined by the features, the data and the status of the devices in which said agent resides and migrates, as well as the accessible devices through Personal Area (PAN) and Local Area (LAN) Networks from the devices in which the agent resides/migrates.
- It is cooperative, because it can cooperate with other mobile agents or other intelligent systems, coordinating with one another to carry out complex tasks.
- It is mobile, because it has the capacity to migrate or move between different locations by means of one or more mobile agent platforms involved between the origin and the destination.

It should be noted that in this definition, the term "mobile" of the expression "mobile agent" is not limited to the scope of mobile telephony or wireless communications, but rather it can be applied to any type of computer or telecommunications network and indicates that said agent can migrate or move between different locations.

Despite their autonomy and capacity to move, mobile agents need the support of an agent platform (also called "agent framework") providing them with the basic services within the system of agents to which they belong. An agent platform is constructed as a set of service applications located in each device of the system of agents, said device being able to be any terminal belonging to a computer or telecommunications network and having Internet connection. A directory of mobile agents, the persistence of mobile agents, the communication between different elements of the platform or the management of the life cycle of the agent, for example, can be mentioned among the services that agent platforms can provide to a mobile agent.

The FIPA (Foundation for Intelligent Physical Agents) is the organization formed with the aim of producing standard specification for agents and agent-based systems, including mobile agents. It currently depends on the Standards Committee of the IEEE Computer Society. The FIPA specifications represent a collection of standards attempting to promote interoperability between heterogeneous agents and the services they may represent.

Mobile agents can communicate with one another by exchanging interaction messages, which are standard messages, ACL messages standardized by the FIPA for the protocol in force are contemplated among them for example. Such interaction messages can be sent/received between any of the parts forming a system of agents, including the mobile agents themselves and the agent platform containing them.

A mobile agent is essentially formed by the following parts:
- Code: it is a program code executed in the agent to carry out its tasks and functionality.
- Identity: it is a global unique agent identifier within a given agent platform.
- Life cycle status: it is an information field indicating the execution status of the agent.
- Additional data: it is an information field containing parameters relating to the programmed logic of the agent.

The mobile agent is self-contained, because it has all the data it needs to be executed and migrate to any location.

An agent platform is identified as one more agent within the system, with a unique identity.

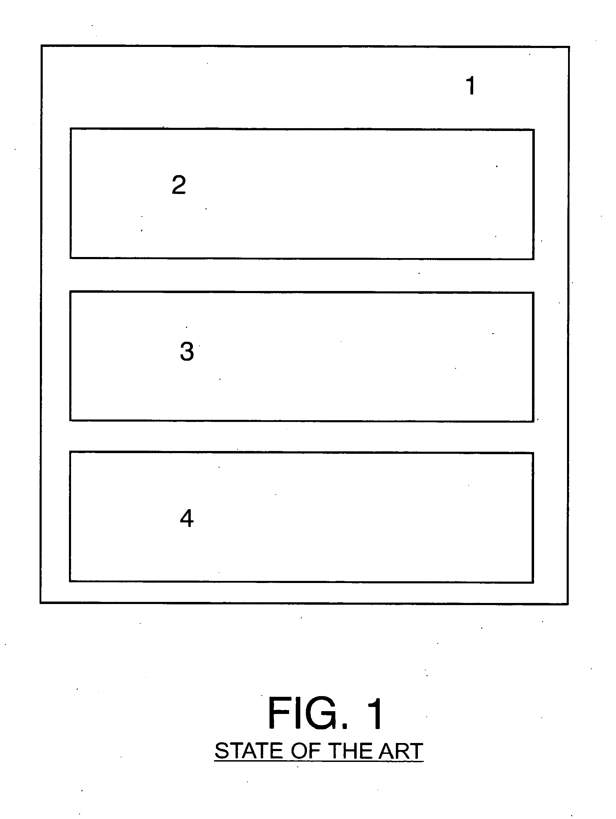

The standard structure of an identity (1) or agent identifier, like the structure of the identity of an agent platform, i.e., the AID of a mobile agent - or of an agent platform associated to that and/or other agents-, is formed, as shown in Figure 1, by:
- A Name field (2) the value of which forms a global unique identifier which can be used as a unique reference expression of the agent -or agent platform-. The FIPA recommends combining the name of the mobile agent with the address of the agent platform in which it is created, separated by the character '@'. Therefore, the Name field (2) usually has assigned thereto the association: AgentName@HomeAgentPlatformAddress.
- Optionally, an Address field (3), formed by a list of transport address to towards which a message can be sent.
- And also a final optional field called Resolvers field (4), formed by a list of addresses of name resolution services.

A mobile agent provides certain technical advantages:
- Reduction of data transmission through the network for client-server applications when partial results involve a large amount of data, since the mobile agent can travel to the service provider carrying out the complete task and returning with the end result.
- Reduction of the impact on the network disconnections, since the mobile agent travels to the destination carrying out a task locally and the agent itself manages its return.
- Autonomous activities which may persist being performed despite a possible failure in the host server.
- Use of services and resources that other elements in the network (more powerful processors, algorithms, databases, hardware, etc...) provide.
- Coordination of actions between several agents

As mentioned above, the agent platform allows the mobility of its agents, Several agent platforms are currently known which are mostly housed in existing servers, which have an assigned static address, such that its identification in the system is simple. Each agent platform must provide the way to identify the elements belonging to a system of agents and the services provided by them. To that end, one or several registers centralizing the system from a server are created. In this way, the agents consult a service of their platform which in turn is in contact with the server to obtain the necessary information.

This creation of a series of registers centralized in a server has been applied to fixed telecommunications networks, in which each device connected to the network maintains its connection permanently.

However, in the current world of IP (Internet protocol)-based mobile telecommunications, each device connected to the network does not have a permanent connection, rather one same device can lose the connection due to coverage loss or due to a disconnection initiated by the network for different reasons, which do not belong to the object of this invention. Therefore, in this special case, it is not possible to associate an agent platform to a stable network identifier.

In addition, within the known protocols of the Application Layer, the SIP (Session Initiation Protocol) protocol has been created by the IETF (Internet Engineering Task Force), which is the organization in charge of protocol engineering and the Internet development division. SIP is a signaling protocol used to initiate interactive multimedia sessions between users of IP networks. These sessions can normally be of: voice, video, instant messaging, telephone, on-line games, virtual reality, contact group management, presence, etc. As of November 2000, SIP was accepted as a 3GPP signaling protocol and a permanent element of the IMS ("IP Multimedia Subsystem) architecture, becoming one of the voice over IP signaling protocols.

The signaling functions of a SIP stack are: setting up, modifying and sending sessions, and registering and locating participants. Participating devices or SIP customers conventionally use port 5060, being able to use the TCP ("Transmission Control Protocol") connection-oriented protocol or the UDP ("User Datagram Protocol") non-connection-oriented protocol as the Transport Protocol to connect with the SIP servers.

The SIP protocol works in collaboration with many other protocols but it is only involved in the signaling part upon setting up the communication session. The characteristics of the sessions are described and the capacities of the participants are negotiated by means of the SDP (Session Description Protocol) protocol, published by the IETF in RFC 2327 (RFC: Request For Comments, is a set of technical and organizational notes stating Internet standards or recommendations).

In the SDP protocol, initial offer messages and subsequent answer messages to the offer are defined according to RFC 2327 and the guidelines of RFC 3264 in order to set up a SIP session.

The SIP thus acts as an envelope for SDP, describing the multimedia content of the session, for example which IP port and codec will be used during the communication etc. In a usual use, the SIP sessions simply define packet streams of the RTP (Real-time Transport Protocol) protocol, which is the current carrier of the voice and video media

Physical terminals, which are devices with the appearance and shape of traditional telephones but which use SIP and RTP for communication, are currently commercially available thanks to many manufacturers (Microsoft®, Apple Computer®, Ubiquity Software®, Dynamicsoft®,...).

The terminals registered in a SIP network have an unequivocally assigned SIP URI address. The uniform resource identifier URI consists of a short text unequivocally identifying generally any accessible resource (service, page, document, e-mail address, encyclopedia,...) in a network. A URI normally consists of two parts: an identifier of the method for accessing the resource (i.e., the protocol identifier) and the resource name, according to RFC 2396 specifications.

HSIAO-HONG TSAI ET AL "Mobile Agent Communications using SIP" describes a model for moving mobile Agents by means of Session Initiation Protocol messages.

In the field of SIP networks and mobile agents, patent document EP 1247387 must be mentioned, introducing modifications in the SIP protocol for the purpose of allowing sending SIP messages associated to computer software code, such as Java byte code, java applets or mobile autonomous software agents. To that end, the improved SIP protocol described in EP 1247387 uses "content_type" field of the SIP message to mark the data as Java code. Thus, the purpose is to use SIP messages to carry applets, byte code or Java agents. In short, patent EP1247387 uses the SIP protocol only as a transport protocol for the mobile agents themselves, particularly for a Java agent platform, within SIP messages, without such messages being useful for the same agents to communicate or manage their own migration.

The relationship between mobile agents in mobile environments and the SIP protocol is also found in patent document CA 2313852, using SIP as a mere transport means for a script containing services or information for executing services in remote environments. The mobile agents can by themselves contain these services, specified in script form and based on SIP. In short, the invention in CA 2313852 also uses the SIP protocol as a simple transport protocol, in this case intended to contain scripts within SIP messages, but it does not provide its adaptation for the communication and management of the migration of mobile agents either.

### DESCRIPTION OF THE INVENTION

The invention is related to a method and a system for the migration of mobile agents according to claims 1 and 14 with alternative embodiments described in the dependent claims.

### BRIEF DESCRIPTION OF THE DRAWINGS

For the purpose of aiding to better understand the features of the invention according to a preferred practical embodiment thereof and to complement this description, a set of illustrative and non-limiting drawings is attached as an integral part thereof. In these drawings:
Figure 1 shows the field structure of an AID identifier of a mobile agent, as known in the state of the art, and which in this invention is the same structure for the identity of an agent platform.
Figure 2 shows the block architecture of a system according to an embodiment of this invention.
Figure 3 shows the flow for sending messages for the communication between mobile agents, according to an embodiment option of this invention.
Figure 4 shows the flow for sending messages for the migration of mobile agents between terminal devices, according to a possible embodiment of this invention.
Figure 5 shows the flow for sending messages for the migration of mobile agents between terminal devices, according to another possible embodiment of this invention.

### DETAILED DESCRIPTION OF THE INVENTION

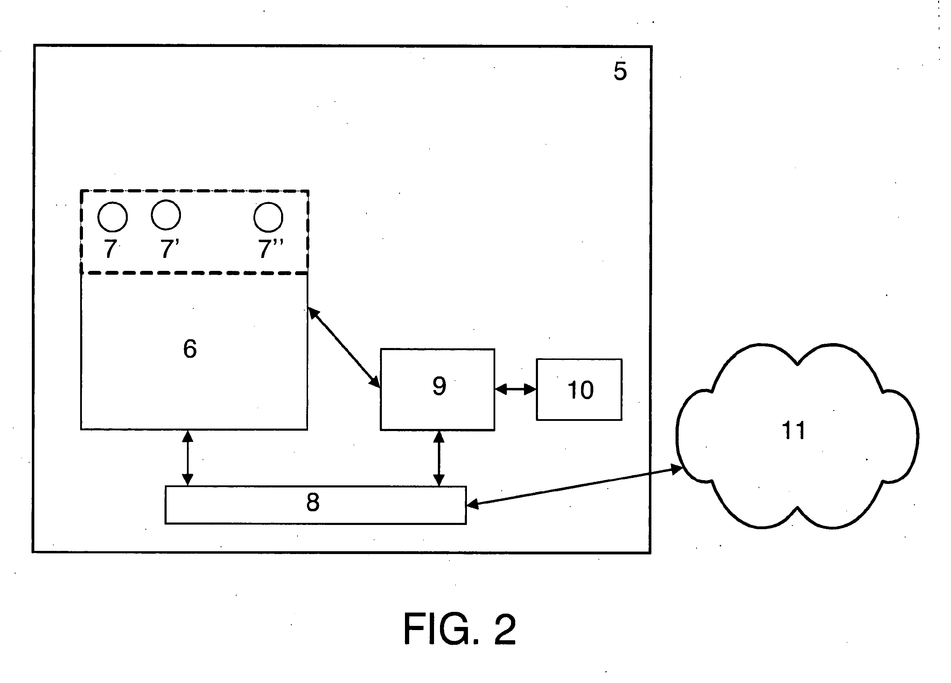

The invention is based on the requirement that the mobile agents are located in at least one terminal device (5) which is registered with a SIP URI address in a telecommunications network (11) supporting the SIP protocol. Figure 2 shows the architecture of said terminal device (5), comprising computer processing means, for example, an integrated circuit, a digital signal microprocessor, a general purpose microprocessor, etc., implementing:
- at least one agent platform (6) containing at least one mobile agent (7, 7', 7"),
- an IP protocol stack (1),
- a SIP protocol stack (9) supported on the IP protocol stack (1),
- an SDP protocol stack (10) communicating with the SIP protocol stack (9).

According to Figure 1 already indicated above, said at least one mobile agent (7, 7', 7") has an identity (1) consisting of three fields: the Name field (2), Address field (3) and Resolver field (4).

The following three functions can be implemented in the device of the invention:

### Location of mobile agents

The method for the location of mobile agents object of the invention assigns the SIP URI address of the terminal device (5) to the Address field (3) of the identity (1) of the at least one mobile agent (7, 7', 7") containing its agent platform (6) and it is also assigned to the Address field (3) of the identity (1) of the agent platform (6).

The terminal device (5) in which a mobile agent (7, 7', 7") can reside, be executed, communicate or migrate must have been registered in advance with a SIP URI address in the network (11).

### Communication between mobile agents

The invention proposes a possible implementation of a method for the communication between a first mobile agent in the first terminal device (5) and a second mobile agent in a second terminal device (5') of the network (11) supporting the SIP protocol.

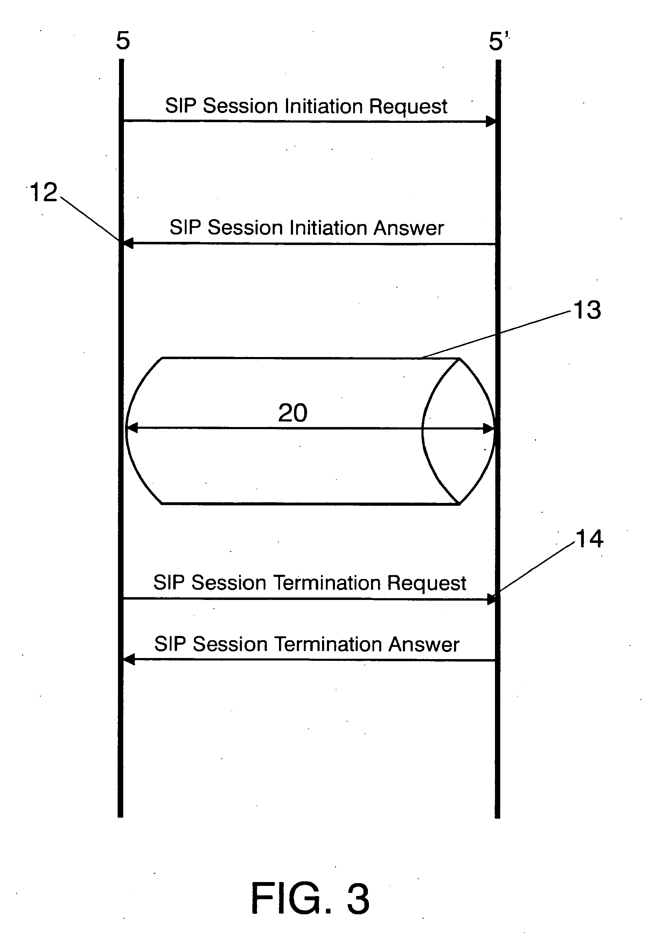

An embodiment of this method for the communication between mobile agents is based on setting up a SIP session to agree on a communication channel between the first and second terminal device (5, 5'), through which both terminal devices (5, 5') will exchange interaction messages between their respective first and second mobile agents. The process for agreeing on this communication channel is by means of the SDP negotiation which is normally carried out while setting up a SIP session and follows the philosophy of RFC 3264: "An Offer/Answer Model with the Session Description Protocol (SDP)", of the SDP protocol messages enveloped by SIP protocol messages, applying it to the world of mobile agents as shown in Figure 3.

The first terminal device (5), which in this example of Figure 3 initiates the communication through its agent platform (6) using its SIP stack (9), generates a SIP session initiation request message containing an initial SDP offer message. The generated SIP session initiation request message has the SIP URI address of the second terminal device (5') assigned in its destination SIP address field, which terminal device, in this example, houses in its corresponding agent platform the mobile agent whereby communication is to be set up. In other words, the value of the Address field (3) of the identity (1) of the second mobile agent arranged in the second terminal device (5') is assigned to the destination SIP address field of the SIP session initiation message emitted by the first terminal device (5).

An information context for the communication between agents traveling in the initial SDP offer message emitted by the first terminal device (5) and in an answer message to the SDP offer emitted by the second terminal device (5') is necessary to set up the communication channel between the two terminal devices (5, 5'). Both communication ends thus agree on an information context containing:
- A media stream comprising one or more interaction messages which are to be exchanged in the communication between the two mobile agents.
- The communication protocol corresponding to the transport or application layer protocol defined in the transport layer of the OSI reference model, preferably the TCP protocol, which is negotiated between both communication ends for sending said interaction messages.
- The IP address and the port number of each communication end, i.e., of the first terminal device (5) and IP address and port of the second terminal device (5') for exchanging the interaction messages.

The first terminal device (5) in which the mobile agent that wishes to start communicating interaction messages is located generates, through its SDP stack (10), an initial SDP offer which it attaches to the body of the SIP session initiation message, preferably an SDP message within a SIP INVITE message, with the described information context, indicating therein the IP address and port to be used by said first terminal device (5) initiating the communication here. After receiving the SIP session initiation message with the initial SDP offer, the second terminal device (5') generates another SIP protocol message which is a SIP session initiation answer, preferably a 200 OK answer message, and it therefore contains the SDP answer to the offer including its IP address and port in the information context. The offer and subsequent answer are valid SDP protocol messages as defined in RFC 2327 and RFC 3264.

Once the answer message to the SIP session initiation has been received in the first terminal device (5), the SIP session with that agreed information context is created and from that instant (12), the two mobile agents can exchange their interaction messages (20) in both directions through the agreed communication channel (13), until said first terminal device (5) requests the termination of the communication by sending a SIP session termination request message, preferably a SIP BYE message, at which time (14) the second terminal device (5') emits another SIP session termination answer message, preferably a 200 OK answer message, ending the communication between agents.

### Migration of mobile agents

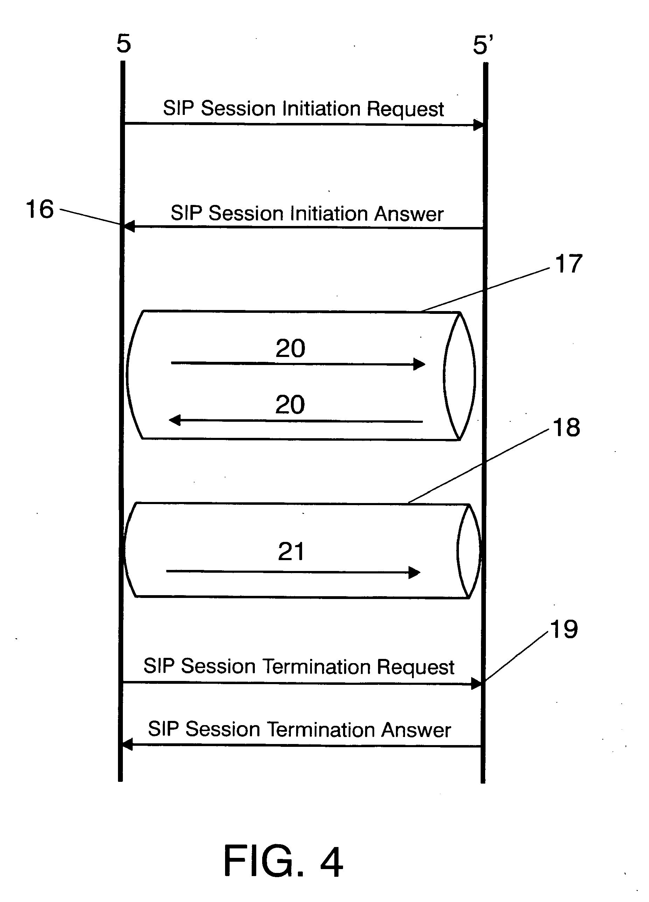

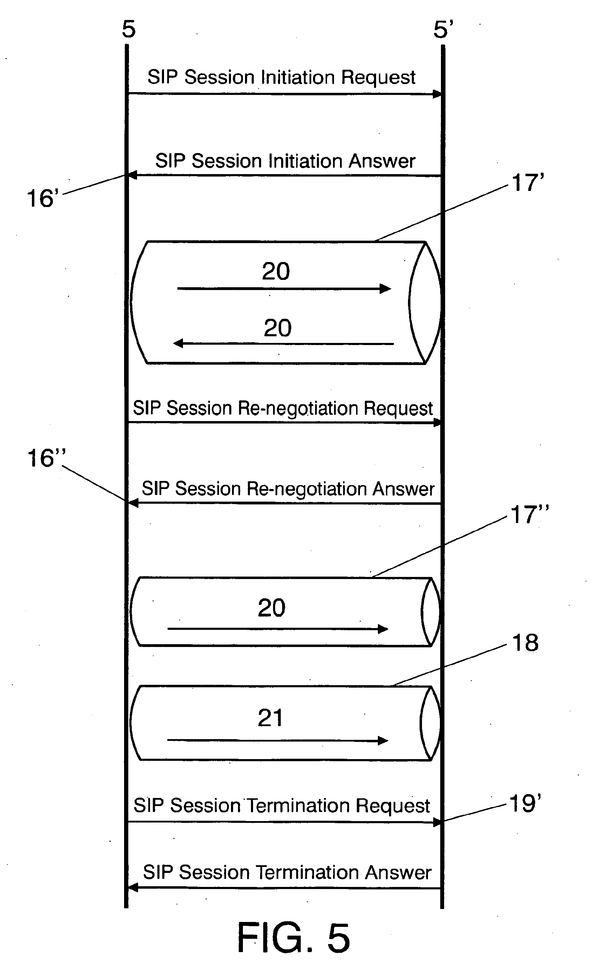

This invention further allows the migration of mobile agents, i.e., the passage of a mobile agent from one terminal to another, also based on setting up a SIP session according to two possible embodiment alternatives shown respectively in Figures 4 and 5. In both practical examples for implementing the migration of mobile agents, the SIP session is used to agree on two communication channels: a specific one for managing the migration, through which the interaction messages (20) are sent, and another specific one for sending the actual mobile agent (21) with its executable code and typical additional data of the mobile agent.

The process for agreeing on these two communication channels is again by means of the SDP negotiation carried out while setting up and/or subsequently re-negotiating a SIP session, according to the philosophy of RFC 3264: "An Offer/Answer Model with the Session Description Protocol (SDP)", applying it to the world of mobile agents in one of the two ways described below.

For both embodiments, the device in which the mobile agent originally resides, in the case of Figures 4 and 5, the first terminal device (5) emits a SIP session initiation request message through its agent platform (6) using its SIP stack (9) and SDP stack (10), containing an initial SDP offer message, preferably a SIP INVITE message containing an SDP message, assigning to the destination SIP address field of the SIP session initiation message the SIP URI address of the second terminal device (5'), in the example the destination device to which the first mobile agent wishes to migrate and which has the agent platform in which it is to be housed. In other words, the value of the Address field (3) of the identity (1) of the agent platform arranged in the second terminal device (5') is assigned to the destination SIP address field SIP of the SIP session initiation message emitted by the first terminal device (5).

In one possible embodiment of the method for migration, shown in Figure 4, the first terminal device (5), in which the agent that wishes to migrate is located, generates an initial SDP offer with an information context for the migration, containing at least the necessary interaction messages (20) for managing the migration, indicating the Transport Protocol to be used to send said interaction messages (20), together with the IP address as well as the port number to be used by said first terminal device (5).

The information context for the migration which is sent in the initial SDP offer optionally also contains the information of the communication channel for sending the actual mobile agent (21), including in the same information context the Transport Protocol to be used for the complete transmission of the mobile agent, the IP address and the network port to be used in the first terminal device (5) for such transmission to the second terminal device (5').

This second terminal device (5') to which the first mobile agent wishes to migrate receives the SIP session initiation request message with the offer in the SDP and generates in turn a SIP session initiation answer message with the SDP answer to the offer, preferably a 200 OK answer message, including its IP address and port number in the information context for the migration specified in the offer.

In short, both in the SIP session initiation request message sent from the first terminal device (5) and in the SIP session initiation answer message emitted by the second terminal device (5'), the information context for the migration comprises:
- A media stream with two different types of content: one content relates to the interaction messages (20) for managing migration and the other content is about the actual mobile agent (21).
- An identification of the transport protocol for sending the interaction messages (20), preferably the TCP protocol, which is negotiated between the originating and destination terminal devices (5, 5') of the migration.
- An identification of the transport protocol for sending the actual mobile agent (21), preferably the TCP protocol, to be negotiated between the origin and destination of the migration.
- An IP address and a network port number corresponding to each of the originating and destination terminal devices (5, 5') of the migration.

In this way, as indicated in Figure 4, both a first communication channel (17) for managing migration by means of corresponding interaction messages (20) and a second communication channel (18) which is subsequently used for the actual migration of the mobile agent have already been agreed on at the instant of creating (16) the SIP session. Once the actual mobile agent (21) has been sent, for the time of ending (19) the communication between the two terminal devices (5, 5'), the corresponding SIP session termination request and answer messages are exchanged: preferably a SIP BYE message and a SIP 200 OK answer message, respectively.

Another embodiment option, shown in Figure 5, is that the information of that second communication channel (18) necessary for sending the actual mobile agent (21) is not included in the information context for the migration of the initial SDP offer. In this case, the two terminal devices (5, 5') renegotiate the SIP session to modify the information context for the migration.

In this other way, in a first instant (16') of creating the SIP session, the information context is only sent with the media stream, transport protocol, IP address and port which are strictly needed to agree on a first communication channel (17) through which interaction messages (20) for managing migration are sent. Both the communication channel for the management (17") of the migration and the second communication channel (18) for said migration of the mobile agent are then agreed on after a re-negotiation (16") of the SIP session by means of sending a SIP session re-negotiation request message by the first terminal device (5), preferably a SIP re-INVITE message containing an SDP message, and the reply of the second terminal device (5') with a SIP session re-negotiation answer message, preferably a 200 OK answer message, containing a modified SDP offer. The modified information context is sent in the request and answer messages with the modified SDP offer, which information context now contains, in addition to the information of the original information context, all the information of the communication channel for sending the actual mobile agent (21). Once said mobile agent has migrated, the involved terminal devices (5, 5') terminate (19') the SIP session by means of the corresponding SIP session termination request and answer messages, preferably a SIP BYE message and a SIP 200 OK answer message, respectively.

The initial offer, subsequent answer and the possible modified offers and new answers for re-negotiation are valid SDP protocol messages according to RFC 2327 and 3264.

In view of this description and set of drawings, persons skilled in the art can understand that the invention has been described according to several preferred embodiments thereof, but that multiple variations can be introduced in said preferred embodiments, without departing from the object of the invention as it has been claimed.

## Claims

1. A method for the migration of mobile agents in a telecommunications network (11) supporting the SIP protocol and comprising at least one first and one second terminal device (5, 5'), which in turn comprise respective agent platforms containing at least one first mobile agent in the first terminal device (5) and at least one second mobile agent in the second terminal device (5'); which method, having assigned a SIP URI address to said at least one first terminal device (5) and another SIP URI address to said at least one second terminal device (5'), and the at least one first and second mobile agents and the respective agent platforms of the first and second terminal device (5, 5') being identified by identities comprising an Address field (3), the method comprising the steps of:
- assigning the SIP URI address of the first terminal device (5) to the Address field (3) of the identity of the at least one first mobile agent;
- assigning the SIP URI address of the second terminal device (5') to the Address field (3) of the identity of the at least one second mobile agent;
- assigning the SIP URI address of the first terminal device (5) to the Address field (3) of the identity of the agent platform of the first terminal device (5);
- assigning the SIP URI address of the second terminal device (5') to the Address field (3) of the identity of the agent platform of the second terminal device (5');
- generating at least one SIP protocol message comprising a body and a destination SIP address field to be transmitted from an emitting one of said two terminal devices (5, 5') to the other receiving one of said terminal devices (5, 5');
- assigning the value of the Address field (3) of the identity of the mobile agent of the receiving terminal device (5, 5') to the destination SIP address field of said at least one SIP protocol message;
- assigning the value of the Address field (3) of the identity of the agent platform of the receiving terminal device (5, 5') to the destination SIP address field of said at least one SIP protocol message;
- assigning an information context to the body of said at least one SIP protocol message comprising:
- a media stream comprising at least one interaction message (20) for managing migration and further comprising a mobile agent (21), which in turn comprises an executable code and additional data forming the mobile agent (21),
- an identification of a transport protocol for an exchange between the first terminal device (5) and the second terminal device (5') of said at least one interaction message which is negotiated between the first and second terminal devices (5, 5') which are respectively the originating and destination terminal devices of the migration,
- an identification of the transport protocol for sending the mobile agent (21), to be negotiated between said first and second terminal devices (5, 5'),
- an IP address for the first terminal device (5) and another IP address for the second terminal device (5'),
- a first network port number of the first terminal device (5) and a second network port of the second terminal device (5'), to be used by the transport protocol in the exchange of said at least one interaction message (20);
- sending, from the emitting terminal device (5, 5'), said at least one SIP protocol message to the receiving terminal device (5, 5') corresponding to the destination SIP address field.

2. A method according to claim 1, **characterized in that** the transport protocol for the exchange between the first terminal device (5) and the second terminal device (5') is a protocol defined in the Transport Layer of the OSI reference model.

3. A method according to claim 1, **characterized in that** the transport protocol for the exchange between the first terminal device (5) and the second terminal device (5') is a protocol defined in the Application Layer of the OSI reference model.

4. A method according to any of the previous claims, **characterized in that** the transport protocol for sending the mobile agent (21) is a protocol defined in the Transport Layer of the OSI reference model.

5. A method according two any of the claims 1-4, **characterized in that** the transport protocol for sending the mobile agent (21) is a protocol defined in the Application Layer of the OSI reference model.

6. A method according to any of the previous claims, **characterized in that** the mobile agent (21) is selected from the first mobile agent and the second mobile agent.

7. A method according to any of the previous claims, **characterized in that** the interaction message between agents is an ACL message.

8. A method according to any of the previous claims, **characterized in that** the SIP protocol message is a SIP session initiation request message.

9. A method according to any of the previous claims, **characterized in that** the SIP protocol message is a SIP session initiation answer message.

10. A method according to any of the previous claims, **characterized in that** the SIP protocol message is a SIP session re-negotiation request message.

11. A method according to any of the previous claims, **characterized in that** the SIP protocol message is a SIP session re-negotiation answer message.

12. A method according to any of the previous claims, **characterized in that** the SIP protocol message is a SIP session termination request message.

13. A method according to any of the previous claims, **characterized in that** the SIP protocol message is a SIP session termination answer message.

14. A system for the migration of mobile agents in a telecommunications network (11) supporting the SIP protocol and comprising at least one first and one second terminal device (5, 5'), which in turn comprise respective agent platforms containing at least one first mobile agent in the first terminal device (5) and at least one second mobile agent in the second terminal device (5'); having means for assigning a SIP URI address to said at least one first terminal device (5) and another SIP URI address to said at least one second terminal device (5'), and the at least one first and second mobile agents and the respective agent platforms of the first and second terminal device (5, 5') being identified by identities comprising an Address field (3), the system comprising:
- means for assigning the SIP URI address of the first terminal device (5) to the Address field (3) of the identity of the at least one first mobile agent;
- means for assigning the SIP URI address of the second terminal device (5') to the Address field (3) of the identity of the at least one second mobile agent;
- means for assigning the SIP URI address of the first terminal device (5) to the Address field (3) of the identity of the agent platform of the first terminal device (5);
- means for assigning the SIP URI address of the second terminal device (5') to the Address field (3) of the identity of the agent platform of the second terminal device (5');
- means for generating at least one SIP protocol message comprising a body and a destination SIP address field to be transmitted from an emitting one of said two terminal devices (5, 5') to the other receiving one of said terminal devices (5, 5');
- means for assigning the value of the Address field (3) of the identity of the mobile agent of the receiving terminal device (5, 5') to the destination SIP address field of said at least one SIP protocol message;
- means for assigning the value of the Address field (3) of the identity of the agent platform of the receiving terminal device (5, 5') to the destination SIP address field of said at least one SIP protocol message;
- means for assigning an information context to the body of said at least one SIP protocol message comprising:
- a media stream comprising at least one interaction message (20) for managing migration and further comprising a mobile agent (21), which in turn comprises an executable code and additional data forming the mobile agent (21),
- an identification of a transport protocol for an exchange between the first terminal device (5) and the second terminal device (5') of said at least one interaction message which is negotiated between the first and second terminal devices (5, 5') which are respectively the originating and destination terminal devices of the migration,
- an identification of the transport protocol for sending the mobile agent (21), to be negotiated between said first and second terminal devices (5, 5'),
- an IP address for the first terminal device (5) and another IP address for the second terminal device (5'),
- a first network port number of the first terminal device (5) and a second network port of the second terminal device (5'), to be used by the transport protocol in the exchange of said at least one interaction message (20);
- means for sending, from the emitting terminal device (5, 5'), said at least one SIP protocol message to the receiving terminal device (5, 5') corresponding to the destination SIP address field.

15. A system according to claim 14, **characterized in that** at least one of the terminal devices (5, 5') selected from the first terminal device (5) and the second terminal device (5') is a fixed terminal.

16. A system according to claim 14, **characterized in that** both the first terminal device (5) and the second terminal device (5') are mobile terminals.

17. A system according to claim 16, **characterized in that** it supports a wireless communications standard selected from GPRS, UMTS and WiMAX.

## Patentansprüche

1. Verfahren zur Migration von mobilen Agenten in einem Telekommunikationsnetz (11), das das SIP-Protokoll untertützt und wenigstens ein erstes und ein zweites Endgerät (5, 5') umfasst, das wiederum jeweilige Agentenplattformen umfasst, die wenigstens einen ersten mobilen Agenten im ersten Endgerät (5) und wenigstens einen zweiten mobilen Agenten im zweiten Endgerät (5') beinhalten; wobei das Verfahren, nach dem Zuordnen einer SIP-URI-Adresse zu dem genannten wenigstens einen zweiten Endgerät (5') und einer anderen SIP-URI-Adresse zu dem genannten wenigstens einen zweiten Endgerät (5') und nach dem Identifizieren der wenigstens einen ersten und zweiten mobilen Agenten und der jeweiligen Agentenplattformen des ersten und zweiten Endgeräts (5, 5') durch Kennungen, die ein Adress-Feld (3) enthalten, die folgenden Schritte beinhaltet:
- Zuordnen der SIP-URI-Adresse des ersten Endgeräts (5) zum Adress-Feld (3) der Identität des wenigstens einen ersten mobilen Agenten;
- Zuordnen der SIP-URI-Adresse des zweiten Endgeräts (5) zum Adress-Feld (3) der Identität des wenigstens einen zweiten mobilen Agenten;
- Zuordnen der SIP-URI-Adresse des ersten Endgeräts (5) zum Adress-Feld (3) der Identität der Agentenplattform des ersten Endgeräts (5);
- Zuordnen der SIP-URI-Adresse des zweiten Endegeräts (5) zum Adress-Feld (3) der Identität der Agentenplattform des zweiten Endgeräts (5);
- Erzeugen von wenigstens einer SIP-Protokollmeldung, die ein Haupttext- und ein Ziel-SIP-Adressfeld zum Übermitteln von einem sendenden der genannten zwei Endgeräte (5, 5') zum anderen empfangenden der genannten Endgeräte (5, 5') umfasst;
- Zuordnen des Wertes des Adress-Feldes (3) der Identität des mobilen Agenten des empfangenden Endgerätes (5, 5') zum Ziel-SIP-Adress-Feld der genannten wenigstens einen SIP-Protokollmeldung;
- Zuordnen des Wertes des Adress-Feldes (3) der Identität der Agentenplattform des empfangenden Endgeräts (5, 5') zum Ziel-SIP-Adress-Feld der genannten wenigstens einen SIP-Protokollmeldung;
- Zuordnen einees Informationskontexts zum Haupttext der genannten wenigstens einen SIP-Protokollmeldung, der Folgendes umfasst:
- einen Medienstrom, der wenigstens eine Interaktionsmeldung (20) zum Verwalten von Migration umfasst und der ferner einen mobilen Agenten (21) umfasst, der wiederum einen ablauffähigen Code und zusätzliche Daten umfasst, die den mobilen Agenten (21) bilden,
- eine Identifikation eines Transportprotokolls für einen Austausch zwischen dem ersten Endgerät (5) und dem zweiten Endgerät (5') der genannten wenigstens einen Interaktionsmeldung, die zwischen dem ersten und dem zweiten Endgerät (5, 5') negoziiert wird, die jeweils das Ursprungs- und das Zielendgerät der Migration sind,
- eine Identifikation des Transportprotokolls zum Senden des mobilen Agenten (21), die zwischen dem genannten ersten und zweiten Endgerät (5, 5') zu negoziieren ist,
- eine IP-Adresse für das erste Endgerät (5) und eine andere IP-Adresse für das zweite Endgerät (5'),
- eine erste Netzwerkport-Nummer des ersten Endgeräts (5) und einen zweiten Netzwerkport des zweiten Endgeräts (5'), zu verwenden durch das Transportprotokoll beim Austauschen der genannten wenigstens einen Interaktionsmeldung (20);
- Senden, von dem sendenden Endgerät (5, 5'), der genannten wenigstens einen SIP-Protokollmeldung zum empfangenden Endgerät (5, 5'), die dem Ziel-SIP-Adress-Feld entspricht.

2. Verfahren nach Anspruch 1, **dadurch gekennzeichnet, dass** das Transportprotokoll für den Austausch zwischen dem ersten Endgerät (5) und dem zweiten Endgerät (5') ein Protokoll ist, das in der Transportschicht des OSI-Referenzmodells definiert ist.

3. Verfahren nach Anspruch 1, **dadurch gekennzeichnet, dass** das Transportprotokoll für den Austausch zwischen dem ersten Endgerät (5) und dem zweiten Endgerät (5') ein Protokoll ist, das in der Anwendungsschicht des OSI-Referenzmodells definiert ist.

4. Verfahren nach einem der vorherigen Ansprüche, **dadurch gekennzeichnet, dass** das Transportprotokoll zum Senden des mobilen Agenten (21) ein Protokoll ist, das in der Transportschicht des OSI-Referenzmodells definiert ist.

5. Verfahren nach einem der Ansprüche 1 bis 4, **dadurch gekennzeichnet, dass** das Transportprotokoll zum Senden des mobilen Agenten (21) ein Protokoll ist, das in der Anwendungsschicht des OSI-Referenzmodells definiert ist.

6. Verfahren nach einem der vorherigen Ansprüche, **dadurch gekennzeichnet, dass** der mobile Agent (21) ausgewählt ist aus dem ersten mobilen Agenten und dem zweiten mobilen Agenten.

7. Verfahren nach einem der vorherigen Ansprüche, **dadurch gekennzeichnet, dass** die Interaktionsmeldung zwischen Agenten eine ACL-Meldung ist.

8. Verfahren nach einem der vorherigen Ansprüche, **dadurch gekennzeichnet, dass** die SIP-Protokollmeldung eine SIP-Session-Initiation-Anforderungsmeldung ist.

9. Verfahren nach einem der vorherigen Ansprüche, **dadurch gekennzeichnet, dass** die SIP-Protokollmeldung eine SIP-Session-Initiation-Antwortmeldung ist.

10. Verfahren nach einem der vorherigen Ansprüche, **dadurch gekennzeichnet, dass** die SIP-Protokollmeldung eine SIP-Session-Re-negotiation-Anforderungsmeldung ist.

11. Verfahren nach einem der vorherigen Ansprüche, **dadurch gekennzeichnet, dass** die SIP-Protokollmeldung eine SIP-Session-Re-negotiation-Antwortmeldung ist.

12. Verfahren nach einem der vorherigen Ansprüche, **dadurch gekennzeichnet, dass** die SIP-Protokollmeldung eine SIP-Session-Termination-Anforderungsmeldung ist.

13. Verfahren nach einem der vorherigen Ansprüche, **dadurch gekennzeichnet, dass** die SIP-Protokollmeldung eine SIP-Session-Termination-Antwortmeldung ist.

14. System für die Migration von mobilen Agenten in einem Telekommunikationsnetz (11), das das SIP-Protokoll unterstützt und wenigstens ein erstes und ein zweites Endgerät (5, 5') umfasst, die wiederum jeweilige Agentenplattformen umfassen, die wenigstens einen ersten mobilen Agenten im ersten Endgerät (5) und wenigstens einen zweiten mobilen Agenten im zweiten Endgerät (5') beinhalten; mit Mitteln zum Zuordnen einer SIP-URI-Adresse zu dem genannten wenigstens einen zweiten Endgerät (5') und einer anderen SIP-URI-Adresse zu dem genannten wenigstens einen zweiten Endgerät (5'), und wobei die wenigstens einen ersten und zweiten mobilen Agenten und die jeweiligen Agentenplattformen des ersten und zweiten Endgeräts (5, 5') durch Kennungen identifiziert werden, die ein Adress-Feld (3) enthalten, wobei das System Folgendes umfasst:
- Mittel zum Zuordnen der SIP-URI-Adresse des ersten Endgeräts (5) zum Adress-Feld (3) der Identität des wenigstens einen ersten mobilen Agenten;
- Mittel zum Zuordnen der SIP-URI-Adresse des zweiten Endgeräts (5) zum Adress-Feld (3) der Identität des wenigstens einen zweiten mobilen Agenten;
- Mittel zum Zuordnen der SIP-URI-Adresse des ersten Endgeräts (5) zum Adress-Feld (3) der Identität der Agentenplattform des ersten Endgeräts (5);
- Mittel zum Zuordnen der SIP-URI-Adresse des zweiten Endgeräts (5) zum Adress-Feld (3) der Identität der Agentenplattform des zweiten Endgeräts (5);
- Mittel zum Erzeugen von wenigstens einer SIP-Protokollmeldung, die ein Haupttext- und ein Ziel-SIP-Adressfeld zum Übermitteln von einem sendenden der genannten zwei Endgeräte (5, 5') zum anderen empfangenden der genannten Endgeräte (5, 5') umfasst;
- Mittel zum Zuordnen des Wertes des Adress-Feldes (3) der Identität des mobilen Agenten des empfangenden Endgerätes (5, 5') zum Ziel-SIP-Adress-Feld der genannten wenigstens einen SIP-Protokollmeldung;
- Mittel zum Zuordnen des Wertes des Adress-Feldes (3) der Identität der Agentenplattform des empfangenden Endgerätes (5, 5') zum Ziel-SIP-Address-Feld der genannten wenigstens einen SIP-Protokollmeldung;
- Mittel zum Zuordnen eines Informationskontexts zum Haupttext der genannten wenigstens einen SIP-Protokollmeldung, der Folgendes umfasst:
- einen Medienstrom, der wenigstens eine Interaktionsmeldung (20) zum Verwalten von Migration umfasst und ferner einen mobilen Agenten (21) umfasst, der wiederum einen ablauffähigen Code und zusätzliche Daten umfasst, die den mobilen Agenten (21) bilden,
- eine Identifikation eines Transportprotokolls für einen Austausch zwischen dem ersten Endgerät (5) und dem zweiten Endgerät (5') der genannten wenigstens einen Interaktionsmeldung, die zwischen dem ersten und dem zweiten Endgerät (5, 5') negoziiert wird, die jeweils das Ursprungs- und das Zielendgerät der Migration sind,
- eine Identifikation des Transportprotokolls zum Senden des mobilen Agenten (21), die zwischen dem genannten ersten und zweiten Endgerät (5, 5') zu negoziieren ist,
- eine IP-Adresse für das erste Endgerät (5) und eine andere IP-Adresse für das zweite Endgerät (5'),
- eine erste Netzwerkport-Nummer des ersten Endgeräts (5) und einen zweiten Netzwerkport des zweiten Endgeräts (5'), zu verwenden durch das Transportprotokoll beim Austauschen der genannten wenigstens einen Interaktionsmeldung (20);
- Mittel zum Senden, von dem sendenden Endgerät (5, 5'), der genannten wenigstens einen SIP-Protokollmeldung zum empfangenden Endgerät (5, 5'), die dem Ziel-SIP-Adress-Feld entspricht.

15. System nach Anspruch 14, **dadurch gekennzeichnet, dass** wenigstens eines der aus dem ersten Endgerät (5) und dem zweiten Endgerät (5') ausgewählten Endgeräte (5, 5') ein festes Endgerät ist.

16. System nach Anspruch 14, **dadurch gekennzeichnet, dass** sowohl das erste Endgerät (5) als auch das zweite Endgerät (5') mobile Endgeräte sind.

17. System nach Anspruch 16, **dadurch gekennzeichnet, dass** es einen Funkkommunikationsstandard unterstützt, der ausgewählt ist aus GPRS, IMTS und WiMAX.

## Revendications

1. Procédé pour la migration d'agents mobiles dans un réseau de télécommunications (11) prenant en charge le protocole SIP et comprenant au moins un premier et un deuxième dispositifs terminaux (5, 5') qui à leur tour comportent des plates-formes d'agent respectives contenant au moins un premier agent mobile dans le premier dispositif terminal (5) et au moins un deuxième agent mobile dans le deuxième dispositif terminal (5') ; ce procédé, après avoir attribué une adresse URI SIP audit au moins un premier dispositif terminal (5) et une autre adresse URI SIP audit au moins un deuxième dispositif terminal (5'), et lesdits au moins un premier et un deuxième agents mobiles et les plates-formes d'agent respectives du premier et du deuxième dispositifs terminaux (5, 5') étant identifiés par des identités, comportant un champ Adresse (3), le procédé comprenant les étapes consistant à :
- attribuer l'adresse URI SIP du premier dispositif terminal (5) au champ Adresse (3) de l'identité dudit au moins un premier agent mobile ;
- attribuer l'adresse URI SIP du deuxième dispositif terminal (5') au champ Adresse (3) de l'identité dudit au moins un deuxième agent mobile ;
- attribuer l'adresse URI SIP du premier dispositif terminal (5) au champ Adresse (3) de l'identité de la plate-forme d'agent du premier dispositif terminal (5) ;
- attribuer l'adresse URI SIP du deuxième dispositif terminal (5') au champ Adresse (3) de l'identité de la plate-forme d'agent du deuxième dispositif terminal (5') ;
- générer au moins un message de protocole SIP comportant un corps et un champ d'adresse SIP de destination devant être transmis depuis un dispositif terminal émetteur parmi lesdits deux dispositifs terminaux (5, 5') vers l'autre dispositif terminal récepteur parmi lesdits deux dispositifs terminaux (5, 5') ;
- attribuer la valeur du champ Adresse (3) de l'identité de l'agent mobile du dispositif terminal récepteur (5, 5') au champ d'adresse SIP de destination dudit au moins message de protocole SIP ;
- attribuer la valeur du champ Adresse (3) de l'identité de la plate-forme d'agent du dispositif terminal récepteur (5, 5') au champ d'adresse SIP de destination dudit au moins un message de protocole SIP ;
- attribuer un contexte d'information au corps dudit au moins un message de protocole SIP comprenant :
- un flux média comportant au moins un message d'interaction (20) pour assurer la gestion de la migration et comprenant en outre un agent mobile (21), lequel englobe à son tour un code exécutable et des données additionnelles constituant l'agent mobile (21),
- une identification d'un protocole de transport pour un échange entre le premier dispositif terminal (5) et le deuxième dispositif terminal (5') dudit au moins un message d'interaction qui est négocié entre le premier et le deuxième dispositifs terminaux (5, 5') qui sont respectivement les dispositifs terminaux d'origine et de destination de la migration,
- une identification du protocole de transport pour envoyer l'agent mobile (21), devant être négocié entre lesdits premier et deuxième dispositifs terminaux (5, 5'),
- une adresse IP pour le premier dispositif terminal (5) et une autre adresse IP pour le deuxième dispositif terminal (5'),
- un premier numéro de Port réseau du premier dispositif terminal (5) et un deuxième Port réseau du deuxième dispositif terminal (5'), destinés à être utilisés par le protocole de transport lors de l'échange dudit au moins un message d'interaction (20) ;
- envoyer, à partir du dispositif terminal émetteur (5, 5'), ledit au moins un message de protocole SIP au dispositif terminal récepteur (5, 5') correspondant au champ d'adresse SIP de destination.

2. Procédé selon la revendication 1, **caractérisé en ce que** le protocole de transport, employé pour l'échange entre le premier dispositif terminal (5) et le deuxième dispositif terminal (5'), est un protocole défini dans la couche Transport du modèle de référence OSI.

3. Procédé selon la revendication 1, **caractérisé en ce que** le protocole de transport, employé pour l'échange entre le premier dispositif terminal (5) et le deuxième dispositif terminal (5'), est un protocole défini dans la couche Application du modèle de référence OSI.

4. Procédé selon l'une quelconque des revendications précédentes, **caractérisé en ce que** le protocole de transport employé pour envoyer l'agent mobile (21), est un protocole défini dans la couche Transport du modèle de référence OSI.

5. Procédé selon l'une quelconque des revendications 1 à 4, **caractérisé en ce que** le protocole de transport employé pour envoyer l'agent mobile (21), est un protocole défini dans la couche Application du modèle de référence OSI.

6. Procédé selon l'une quelconque des revendications précédentes, **caractérisé en ce que** l'agent mobile (21) est sélectionné parmi le premier agent mobile et le deuxième agent mobile.

7. Procédé selon l'une quelconque des revendications précédentes, **caractérisé en ce que** le message d'interaction entre les agents est un message ACL.

8. Procédé selon l'une quelconque des revendications précédentes, **caractérisé en ce que** le message de protocole SIP est un message de demande d'ouverture de session SIP.

9. Procédé selon l'une quelconque des revendications précédentes, **caractérisé en ce que** le message de protocole SIP est un message de réponse d'ouverture de session SIP.

10. Procédé selon l'une quelconque des revendications précédentes, **caractérisé en ce que** le message de protocole SIP est un message de demande de renégociation de session SIP.

11. Procédé selon l'une quelconque des revendications précédentes, **caractérisé en ce que** le message de protocole SIP est un message de réponse de renégociation de session SIP.

12. Procédé selon l'une quelconque des revendications précédentes, **caractérisé en ce que** le message de protocole SIP est un message de demande de terminaison de session SIP.

13. Procédé selon l'une quelconque des revendications précédentes, **caractérisé en ce que** le message de protocole SIP est un message de réponse de terminaison de session SIP.

14. Système pour la migration d'agents mobiles dans un réseau de télécommunications (11) prenant en charge le protocole SIP et comprenant au moins un premier et un deuxième dispositifs terminaux (5, 5') qui à leur tour comportent des plates-formes d'agent respectives contenant au moins un premier agent mobile dans le premier dispositif terminal (5) et au moins un deuxième agent mobile dans le deuxième dispositif terminal (5') ; possédant des moyens pour attribuer une adresse URI SIP audit au moins un premier dispositif terminal (5) et une autre adresse URI SIP audit au moins un deuxième dispositif terminal (5'), et lesdits au moins un premier et un deuxième agents mobiles et les plates-formes d'agent respectives du premier et du deuxième dispositifs terminaux (5, 5') étant identifiés par des identités comportant un champ Adresse (3), le système englobant :
- des moyens pour attribuer l'adresse URI SIP du premier dispositif terminal (5) au champ Adresse (3) de l'identité dudit au moins un premier agent mobile ;
- des moyens pour attribuer l'adresse URI SIP du deuxième dispositif terminal (5') au champ Adresse (3) de l'identité dudit au moins un deuxième agent mobile ;
- des moyens pour attribuer l'adresse URI SIP du premier dispositif terminal (5) au champ Adresse (3) de l'identité de la plate-forme d'agent du premier dispositif terminal (5) ;
- des moyens pour attribuer l'adresse URI SIP du deuxième dispositif terminal (5') au champ Adresse (3) de l'identité de la plate-forme d'agent du deuxième dispositif terminal (5') ;
- des moyens pour générer au moins un message de protocole SIP comportant un corps et un champ d'adresse SIP de destination devant être transmis depuis un dispositif terminal émetteur parmi lesdits deux dispositifs terminaux (5, 5') vers l'autre dispositif terminal récepteur parmi lesdits deux dispositifs terminaux (5, 5') ;
- des moyens pour attribuer la valeur du champ Adresse (3) de l'identité de l'agent mobile du dispositif terminal récepteur (5, 5') au champ d'adresse SIP de destination dudit au moins message de protocole SIP ;
- des moyens pour attribuer la valeur du champ Adresse (3) de l'identité de la plate-forme d'agent du dispositif terminal récepteur (5, 5') au champ d'adresse SIP de destination dudit au moins un message de protocole SIP ;
- des moyens pour attribuer un contexte d'information au corps dudit au moins un message de protocole SIP comprenant :
- un flux média comportant au moins un message d'interaction (20) pour assurer la gestion de la migration et comprenant en outre un agent mobile (21), lequel englobe à son tour un code exécutable et des données additionnelles constituant l'agent mobile (21),
- une identification d'un protocole de transport pour un échange entre le premier dispositif terminal (5) et le deuxième dispositif terminal (5') dudit au moins un message d'interaction qui est négocié entre le premier et le deuxième dispositifs terminaux (5, 5') qui sont respectivement les dispositifs terminaux d'origine et de destination de la migration,
- une identification du protocole de transport pour envoyer l'agent mobile (21), devant être négocié entre lesdits premier et deuxième dispositifs terminaux (5, 5'),
- une adresse IP pour le premier dispositif terminal (5) et une autre adresse IP pour le deuxième dispositif terminal (5'),
- un premier numéro de Port réseau du premier dispositif terminal (5) et un deuxième Port réseau du deuxième dispositif terminal (5'), destinés à être utilisés par le protocole de transport lors de l'échange dudit au moins un message d'interaction (20) ;
- des moyens pour envoyer, à partir du dispositif terminal émetteur (5, 5'), ledit au moins un message de protocole SIP au dispositif terminal récepteur (5, 5') correspondant au champ d'adresse SIP de destination

15. Système selon la revendication 14, **caractérisé en ce qu'**au moins un des dispositifs terminaux (5, 5'), sélectionné parmi le premier dispositif terminal (5) et le deuxième dispositif terminal (5'), est un terminal fixe.

16. Système selon la revendication 14, **caractérisé en ce que** le premier dispositif terminal (5) et le deuxième dispositif terminal (5') sont tous deux des terminaux mobiles.

17. Système selon la revendication 16, **caractérisé en ce qu'**il prend en charge un standard de communications sans fil sélectionné à partir des standards suivants, à savoir GPRS, UMTS et WiMAX.
